# EUROPEAN PATENT APPLICATION

(11) **EP 4 253 313 A1**
(43) Date of publication of application: **04.10.2023**
(21) Application number: 21897634.8
(22) Date of filing: 01.11.2021
(51) Int. Cl.: C01B 3/38, C01B 3/48, H05B 3/48, H01M 8/0606

(54) **HEATER, HEATER PRODUCTION METHOD, AND HEATER ATTACHMENT METHOD**

(30) Priority: 30.11.2020 JP 2020198554
(71) Applicant: Panasonic Intellectual Property Management Co., Ltd., Osaka-shi, Osaka 540-6207 (JP)
(72) Inventor: YOSHIDA, Yutaka, Osaka-shi, Osaka (JP); SHIMADA, Yasuaki, Osaka-shi, Osaka (JP); TAKEDA, Kenyu, Osaka-shi, Osaka (JP); YOSHIMURA, Mitsuo, Osaka-shi, Osaka (JP); NISHIZAKI, Masataka, Osaka-shi, Osaka (JP)
(74) Representative: Grünecker Patent- und Rechtsanwälte PartG mbB
(86) International application number: PCT/JP2021/040198
(87) International publication number: WO 2022/113658

(57) **Abstract**

Provided is heater (100) including straight end parts (108) defined as both end parts, straight end parts (108) being continuously formed by at least two circular arc parts and straight parts with folded parts. At least two circular arc parts (first circular arc part (105a), second circular arc part (105b), and third circular arc part (105c)) each extend in a circumferential direction of hydrogen generator (103). Straight parts (first straight part and second straight part (106b)) connect corresponding circular arc parts to each other. Straight end parts (108) are formed with a gap that is larger in dimension than an outer shape of protrusions (102) of hydrogen generator (103). Second circular arc part (105b) and third circular arc part (105c) are formed having a gap therebetween that is larger than a gap between protrusions (102) of hydrogen generator (103) in a direction orthogonal to the circumferential direction of hydrogen generator (103).

## Description

### TECHNICAL FIELD

The present disclosure relates to a heater for a hydrogen generator, a method for manufacturing the heater, and a method for attaching the heater.

### BACKGROUND ART

PTL 1 discloses a deformable heater (referred to below as a heater) that heats an outer cylinder of a hydrogen generator. The heater has a spiral shape.

PTL 2 discloses a heater for heating an outer cylinder of a reformer (referred to below as a hydrogen generator). This heater has a wave shape obtained by bending a micro-heater element multiple times, and is soft enough to be wound and fixed around an outer cylinder while forming the shape of a belly band.

### Citation List

### Patent Literature

PTL 1: Unexamined Japanese Patent Publication No. 2010-275164
PTL 2: Unexamined Japanese Patent Publication No. 2010-013323

### SUMMARY OF THE INVENTION

The present disclosure provides a heater for a hydrogen generator, a method for manufacturing the heater, and a method for attaching the heater, the heater being configured to prevent a catalyst from deteriorating due to water wetting caused by condensation of water vapor in a reformed gas at startup.

The heater in the present disclosure is for a hydrogen generator, and is attached to the hydrogen generator having an outer periphery provided with protrusions. The heater according to the present disclosure includes straight end parts defined as both end parts, the straight end parts being continuously formed by at least two circular arc parts and straight parts with folded parts. The at least two circular arc parts each extend in a circumferential direction of the hydrogen generator. The straight parts connect the circular arc parts to each other. The straight end parts are formed with a gap that is larger in dimension than an outer shape of the protrusions of the hydrogen generator. The at least two circular arc parts include circular arc parts formed with a gap larger than a gap between the protrusions of the hydrogen generator in a direction orthogonal to the circumferential direction.

The method for manufacturing the heater according to the present disclosure includes a two-dimensional bending step and a UO forming step. The two-dimensional bending step is performed to bend one sheath heater in the shape of a rod in a two-dimensional manner. The one sheath heater in the shape of a rod is bent into a first shape in a two-dimensional manner in the two-dimensional bending step, the first shape including straight end parts defined as both end parts, the straight end parts being continuously formed by at least two circular arc parts and straight parts with folded parts. The at least two circular arc parts each extend in a circumferential direction of a hydrogen generator having an outer periphery provided with protrusions. The straight parts connect the circular arc parts to each other. The one sheath heater in the shape of a rod is bent into the first shape in a two-dimensional manner in the two-dimensional bending step, the first shape including the at least two circular arc parts that also include circular arc parts formed with a gap larger than a gap between the protrusions of the hydrogen generator in a direction orthogonal to the circumferential direction. The UO forming step is performed to form the sheath heater bent in a two-dimensional manner in the two-dimensional bending step into a substantially annular shape in plan view by performing UO forming on the sheath heater to form a gap between the straight end parts, the gap being larger in dimension than an outer shape of the protrusions of the hydrogen generator.

The method for attaching the heater according to the present disclosure is performed to attach the heater according to the present disclosure to the outside of the hydrogen generator, the method including an inserting step, a circumferential positioning step, and a fixing step. The inserting step is performed to insert the heater onto the outside of the hydrogen generator to allow the protrusions of the hydrogen generator to pass through at least between the straight end parts of the heater. The circumferential positioning step is performed to rotate the heater in the circumferential direction of the hydrogen generator to allow the protrusions each to be positioned at a predetermined position between the circular arc parts. The fixing step is performed to fix the heater positioned at the predetermined position to the hydrogen generator.

The heater according to the present disclosure can prevent a catalyst from being wetted with water and deteriorating due to condensation of water vapor in a reformed gas at startup.

The method for manufacturing the heater according to the present disclosure can relatively easily manufacture the heater according to the present disclosure that prevents the catalyst from being wetted with water and deteriorating due to condensation of water vapor in a reformed gas at startup.

The method for attaching the heater according to the present disclosure enables the heater according to the present disclosure to be relatively easily attached to the hydrogen generator according to the present disclosure, having the outer periphery provided with the protrusion.

### BRIEF DESCRIPTION OF THE DRAWINGS

Fig. 1 is a schematic external view illustrating an external appearance of a hydrogen generator according to a first exemplary embodiment to which a heater according to the first exemplary embodiment is attached.
Fig. 2 is a schematic sectional view illustrating a configuration of the hydrogen generator according to the first exemplary embodiment.
Fig. 3 is a perspective view illustrating a configuration of the heater according to the first exemplary embodiment.
Fig. 4 is an explanatory view illustrating a method for manufacturing the heater according to the first exemplary embodiment.
Fig. 5 is an explanatory view illustrating a method for attaching the heater according to the first exemplary embodiment.
Fig. 6 is an explanatory view illustrating a method for manufacturing a heater according to a first modification.
Fig. 7 is an explanatory view illustrating a method for manufacturing a heater according to a second modification.
Fig. 8 is a plan view illustrating a configuration of a heater according to a fourth modification.

### DESCRIPTION OF EMBODIMENT

### (Knowledge and the like underlying the present disclosure)

From the time when the inventors have conceived the present disclosure, a technique for generating a hydrogen-rich reformed gas applicable to fuel gas or the like of a fuel cell power generator has been known. This technique enables a hydrogen-rich reformed gas to be generated by generating hydrogen from a hydrocarbon-based fuel such as city gas by a steam reforming reaction, and removing impurities such as carbon monoxide (CO) as a by-product.

This technique for generating a hydrogen-rich reformed gas from which impurities such as CO have been removed uses a reformer (referred to below as a hydrogen generator). The hydrogen generator includes a reaction tube composed of multiple cylinders having a cylindrical shape as a whole. The reaction tube is provided inside with a heating device. The reaction tube includes a first cylinder (referred to below as a combustion cylinder) forming an outer wall of the heating device, a second cylinder (referred to below as an innermost cylinder) provided outside the combustion cylinder, an inner cylinder provided outside the innermost cylinder, and an outer cylinder provided outside the inner cylinder. An annular space between the innermost cylinder and the inner cylinder is filled with a reforming catalyst, and an annular space between the inner cylinder and the outer cylinder is filled with a transforming catalyst (referred to below as a CO reduction catalyst) and a selective oxidation catalyst (referred to below as a CO removal catalyst).

The hydrogen generator is provided with a heater for heating the CO reduction catalyst and the CO removal catalyst at startup. The hydrogen generator quickly raises temperature of the CO reduction catalyst and temperature of the CO removal catalyst by energizing and heating the heater at startup to cause the CO reduction catalyst and the CO removal catalyst to efficiently react. The hydrogen generator is configured to simultaneously heat the CO reduction catalyst and the CO removal catalyst by heating the outer cylinder with one heater.

To commercially produce the hydrogen generator, the hydrogen generator is required to be provided on an outer peripheral surface of the outer cylinder with a temperature detecting port for measuring at least temperature of the CO reduction catalyst or the CO removal catalyst, and a selective oxidation air port for supplying air necessary for a selective oxidation reaction of the CO removal catalyst. The temperature detecting port and the selective oxidation air port are typically configured to protrude outward from the outer peripheral surface of the outer cylinder.

PTL 1 discloses a configuration in which a spiral heater is installed in an outer cylinder. This disclosed example causes problems in that a heater is less likely to be wound in a spiral shape while avoiding the temperature detecting port and the selective oxidation air port, and conversely a heater formed in a spiral shape in advance cannot be assembled due to obstacles formed by the temperature detecting port and the selective oxidation air port.

PTL 2 discloses a method for winding and fixing a heater formed in a wave shape around an outer cylinder in the shape of a belly band without interference of a temperature detection port or a selective oxidation air port. This disclosed example may cause increase in an interval between waves of the heater formed in a wave shape when the heater is installed by being wound around the outer cylinder due to assembly variation. This disclosure example also causes a problem in that gas flowing through the CO reduction catalyst and the CO removal catalyst include first gas flowing through an increased interval between waves and being not in contact with the heater through the outer cylinder while having temperature without sufficient increase, the first gas causing water vapor in a reformed gas to be condensed to wet and deteriorate the catalyst with water.

For these problems, it is conceivable that a heater having a wave shape with a minimized interval between waves is formed into a tubular structure in advance to prevent assembly variation during installation, and is installed on the outer cylinder.

However, the heater needs to have a sheath diameter more than or equal to a certain value (e.g., ϕ6 or more) to form the tubular structure. This requirement causes decrease in the interval between the waves to fail, and thus generating a gas flowing at a temperature without sufficient increase at a place away from the heater in the circumferential direction of the cylinder. Then, water vapor in the reformed gas is condensed at the place to wet and deteriorate the catalyst with water.

Thus, the present disclosure provides a heater for a hydrogen generator, the heater having no interference with a protrusion in a circumferential direction of the hydrogen generator during installation, even in a tubular structure using a sheath heater having a sheath diameter more than or equal to a certain value. The present disclosure also provides a heater for a hydrogen generator, the heater being formed in a shape, the shape allowing the hydrogen generator to be uniformly heated in its circumferential direction to prevent water vapor in a reformed gas from being condensed to wet a catalyst with water.

Hereinafter, an exemplary embodiment is described in detail with reference to the accompanying drawings. However, details more than necessary may not be described. For example, details of already well-known matters may not be described, or description of a substantially identical configuration may not be duplicated. This is to avoid an unnecessary redundancy in the following description and to facilitate understanding by those skilled in the art.

The accompanying drawings and the following description are only presented to help those skilled in the art fully understand the present disclosure and are not intended to limit the subject matters described in the scope of claims.

### (First exemplary embodiment)

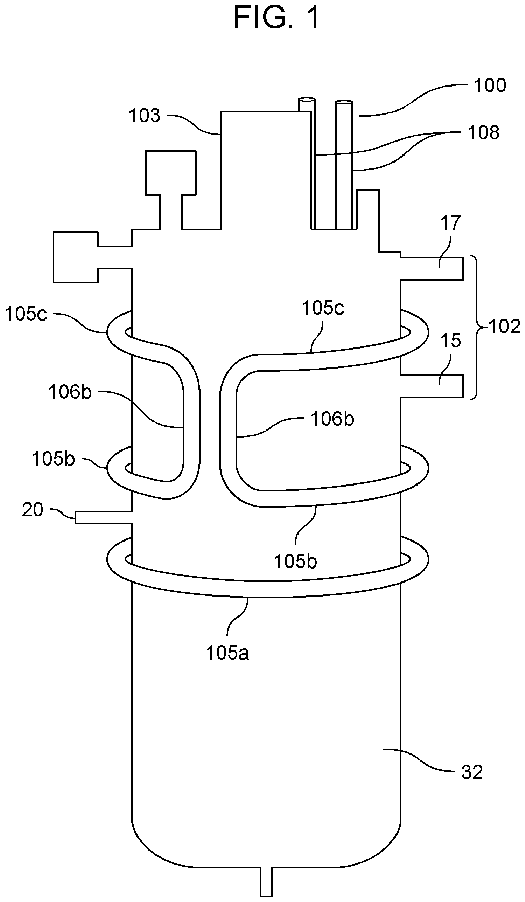

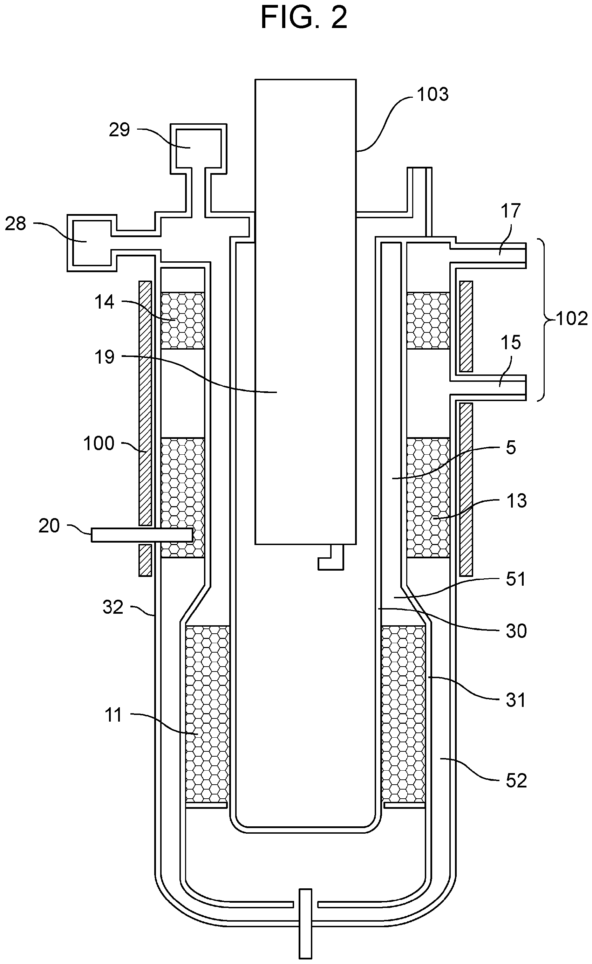

Heater 100 according to a first exemplary embodiment attached to hydrogen generator 103 according to the first exemplary embodiment will be described below with reference to Figs. 1 and 2. Fig. 1 illustrates hydrogen generator 103 having a longitudinal direction aligned with a vertical direction. Hereinafter, the vertical direction in a state where hydrogen generator 103 is installed as illustrated in Fig. 1 (corresponding to an installation state according to the present disclosure) may be described as an up-down direction. The vertical direction of heater 100 in which straight end parts 108 are provided above and first circular arc part 105a are provided below as illustrated in Fig. 1 may be described as the up-down direction. The same applies to other exemplary embodiments.

### [1-1. Configuration]

Fig. 1 is a schematic external view illustrating an external appearance of hydrogen generator 103 according to the first exemplary embodiment to which heater 100 according to the first exemplary embodiment is attached. Fig. 2 is a schematic configuration diagram illustrating a configuration of hydrogen generator 103.

### (Configuration of hydrogen generator)

With reference to Figs. 1 and 2, a configuration of hydrogen generator 103 according to the first exemplary embodiment, which is an example of the hydrogen generator according to the present disclosure, will be first described. As illustrated in Fig. 2, hydrogen generator 103 includes innermost cylinder 30 with an axial direction being a substantially vertical direction, inner cylinder 31 located outside innermost cylinder 30, and outer cylinder 32 located outside inner cylinder 31.

Innermost cylinder 30 is provided inside with heating device 19 that heats an inner peripheral surface of innermost cylinder 30 while being surrounded by innermost cylinder 30.

A-gas flow path 51 is formed between an outer peripheral surface of innermost cylinder 30 and an inner peripheral surface of inner cylinder 31, and B-gas flow path 52 is formed between an outer peripheral surface of inner cylinder 31 and an inner peripheral surface of outer cylinder 32.

Inner cylinder 31 includes an upper part provided with water feeder 28 that feeds water to an upstream part between innermost cylinder 30 and inner cylinder 31, and with raw material feeder 29 that feeds a raw material into a space between innermost cylinder 30 and inner cylinder 31.

Innermost cylinder 30 and inner cylinder 31 constitute evaporator 5 for generating a mixed gas of water and a raw material by heat from innermost cylinder 30 heated by heating device 19 after the water and the raw material are fed from water feeder 28 and raw material feeder 29, respectively.

The space between innermost cylinder 30 and inner cylinder 31 includes a downstream part of evaporator 5 in A-gas flow path 51, the downstream part being provided with reforming catalyst 11 that converts the mixed gas generated in evaporator 5 into a hydrogen-rich reformed gas by a steam reforming reaction.

Between inner cylinder 31 and outer cylinder 32, CO reduction catalyst 13 for reducing CO in the reformed gas reacted with reforming catalyst 11 is provided in B-gas flow path 52. Additionally, between inner cylinder 31 and outer cylinder 32, CO removal catalyst 14 for further reducing CO concentration in post-transformation gas reacted with CO reduction catalyst 13 is provided at a downstream part of CO reduction catalyst 13 in B-gas flow path 52.

Outer cylinder 32 includes an upper part provided with air pipe 15 communicating with a space between CO reduction catalyst 13 and CO removal catalyst 14 in B-gas flow path 52. Outer cylinder 32 also includes another upper part provided with outlet pipe 17 communicating with a space downstream of CO removal catalyst 14 in B-gas flow path 52.

The post-transformation gas is mixed with air fed from air pipe 15 and is fed to CO removal catalyst 14, and then the CO concentration is reduced to several ppm level by the selective oxidation reaction.

The reformed gas reacted in CO removal catalyst 14 is discharged to the outside through outlet pipe 17.

Outer cylinder 32 is provided with temperature port 20 for detecting temperatures of CO reduction catalyst 13 and CO removal catalyst 14.

As illustrated in Fig. 1, heater 100 is provided in an outer circumferential part of outer cylinder 32.

Each of air pipe 15 and outlet pipe 17 is protrusion 102 of hydrogen generator 103.

### (Structure of heater)

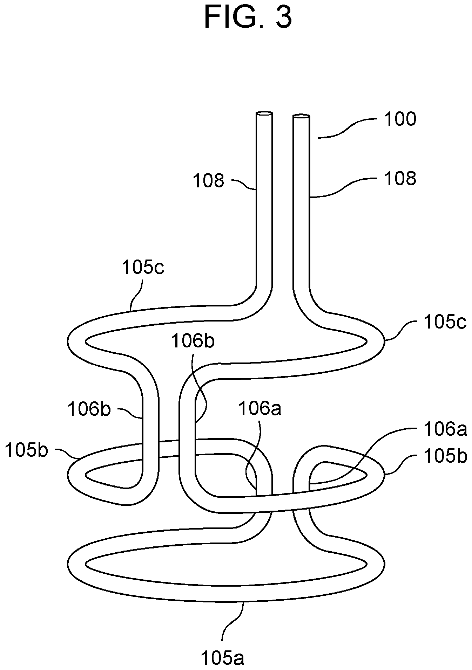

With reference to Fig. 3, a configuration of heater 100 according to the first exemplary embodiment, which is an example of the heater according to the present disclosure, will be next described.

Fig. 3 is a perspective view illustrating a configuration of heater 100 according to the first exemplary embodiment.

As illustrated in Fig. 3, heater 100 includes first circular arc part 105a extending in the circumferential direction (a substantially horizontal direction in Fig. 3) of hydrogen generator 103. That is, first circular arc part 105a extends along the circumference of a circle parallel to the substantially horizontal direction. The same applies to second circular arc part 105b to be described later and third circular arc part 105c to be described later. In the following description, first circular arc part 105a, second circular arc part 105b to be described later, and third circular arc part 105c to be described later may be collectively referred to as circular arc part 105. First circular arc part 105a is formed having a linear dimension slightly shorter than an outer peripheral length of outer cylinder 32 of hydrogen generator 103, the linear dimension allowing first circular arc part 105a to surround an outer periphery of hydrogen generator 103 by almost one circumference.

First circular arc part 105a is connected at its both ends to respective first straight parts 106a extending upward around hydrogen generator 103. In the following description, first straight part 106a and second straight part 106b to be described later may be collectively referred to as straight part 106. First straight parts 106a are each connected at their upper ends to second circular arc part 105b extending in the circumferential direction of hydrogen generator 103. First straight part 106a, and first circular arc part 105a and second circular arc part 105b that are connected to the first straight part 106a, constitute first folded part 107a to be described later. In the following description, first folded part 107a and second folded part 107b to be described later may be collectively referred to as folded part 107.

Each second circular arc part 105b is connected at its leading end to second straight part 106b extending upward around hydrogen generator 103. Although second circular arc part 105b is described here as each second circular arc part 105b by being divided into two parts for convenience of description, these two parts are combined to form one second circular arc part 105b. The same applies to description of each third circular arc part 105c to be described later. Each second straight part 106b is formed having a linear dimension longer than a vertical interval between air pipe 15 and outlet pipe 17 that are each protrusion 102.

Each second straight part 106b is connected at its upper end to third circular arc part 105c extending in the circumferential direction of hydrogen generator 103. Second straight part 106b, and second circular arc part 105b and third circular arc part 105c connected to second straight part 106b, constitute second folded part 107b to be described later.

Second circular arc part 105b and third circular arc part 105c are formed having an interval therebetween that is larger than an interval between protrusions 102 of hydrogen generator 103 in the vertical direction (a direction orthogonal to the circumferential direction of hydrogen generator 103).

Each third circular arc part 105c is connected at its leading end to straight end part 108 extending in the up-down direction (a substantially vertical direction in Fig. 3) of hydrogen generator 103. Straight end parts 108 are formed having an interval therebetween that is larger than outer length of air pipe 15 and outlet pipe 17 that are each protrusion 102. Straight end parts 108 are each configured to be connected to a power source (not illustrated) to energize and heat heater 100.

Heater 100 includes first circular arc part 105a, each first straight part 106a, each second circular arc part 105b, each second straight part 106b, each third circular arc parts 105c, and each straight end parts 108, which are formed by bending a rod-like sheath heater formed into first folded part 107a and second folded part 107b.

Heater 100 has a substantially annular shape in plan view, and is formed in a columnar shape and located around the outer periphery of hydrogen generator 103 as a whole with first circular arc part 105a, each first straight part 106a, each second circular arc part 105b, each second straight part 106b, and each third circular arc part 105c.

### (Method for manufacturing heater)

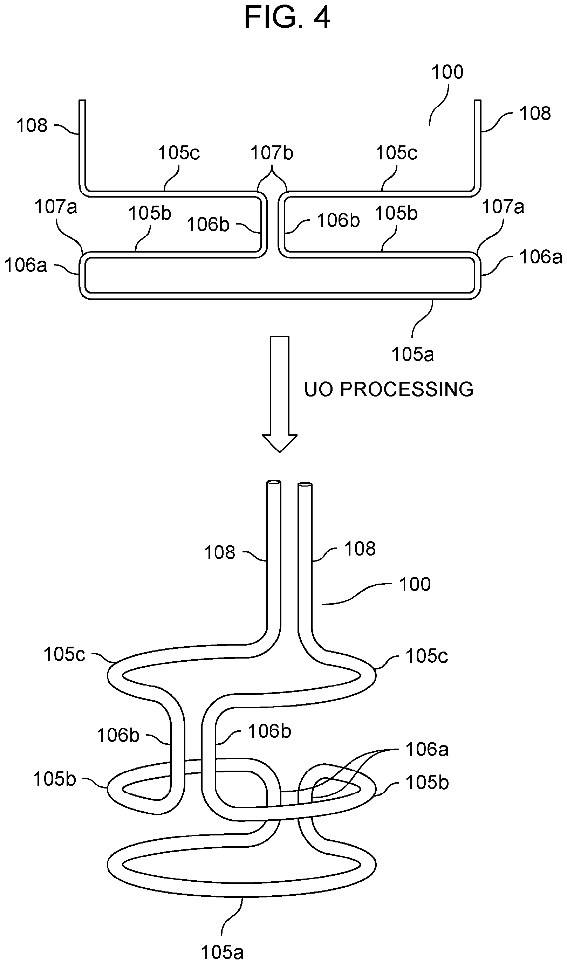

Next, a method for manufacturing heater 100 will be described with reference to Fig. 4.

Fig. 4 is an explanatory view illustrating the method for manufacturing heater 100 according to the first exemplary embodiment.

The method for manufacturing heater 100 includes a two-dimensional bending step and a UO forming step. The two-dimensional bending step is performed to bend one sheath heater in the shape of a rod in a two-dimensional manner. The one sheath heater in the shape of a rod is bent into a shape in a two-dimensional manner in the two-dimensional bending step, the shape including straight end parts 108 defined as both end parts, straight end parts 108 being continuously formed by at least two circular arc parts 105 and straight parts 106 with folded parts 107 (first folded part 107a and second folded part 107b). At least two circular arc parts 105 (first circular arc part 105a, second circular arc part 105b, and third circular arc part 105c) each extend in the circumferential direction of hydrogen generator 103 having the outer periphery provided with protrusions 102. Straight parts 106 (first straight part 106a and second straight part 106b) connect corresponding circular arc parts 105 to each other.

More specifically, one sheath heater is first bent in a two-dimensional manner to form heater 100 in a two-dimensional shape having the following structure as illustrated in Fig. 4. That is, each first straight part 106a is connected at its one end to corresponding one of both ends of first circular arc part 105a at a right angle. Each second circular arc part 105b is connected at its one end to the other end of corresponding one of first straight parts 106a, and each second circular arc part 105b extends substantially parallel to first circular arc part 105a. Each second straight part 106b is connected at its one end to the other end of corresponding one of second circular arc parts 105b at a right angle. Each third circular arc part 105c is connected at its one end to the other end of corresponding one of second straight parts 106b, and each third circular arc part 105c extends substantially parallel to first circular arc part 105a and second circular arc parts 105b. Each straight end part 108 is connected at its one end to the other end of corresponding one of third circular arc parts 105c at a right angle.

First circular arc part 105a, each first straight part 106a, each second circular arc parts 105b, each second straight part 106b, each third circular arc parts 105c, and each straight end part 108 are each formed in a two-dimensional shape. The one sheath heater in the shape of a rod is also bent into a second shape in a two-dimensional manner in the two-dimensional bending step, the second shape including second circular arc part 105b and third circular arc part 105c that are formed with a gap larger than a gap between protrusions 102 of hydrogen generator 103 in the direction orthogonal to the circumferential direction.

Then, the UO forming step is performed to form the sheath heater bent in a two-dimensional manner in the two-dimensional bending step into a substantially annular shape in plan view by performing UO forming on the sheath heater to form a gap between straight end parts 108, the gap being larger in dimension than an outer shape of protrusions 102 of hydrogen generator 103. Specifically, UO bending is performed in the UO forming step to first form heater 100 in a two-dimensional shape formed as described above and illustrated in Fig. 4 into a U-shape and then into an O-shape, so that heater 100 in a two-dimensional shape is formed into an annular three-dimensional shape in plan view.

As a result, heater 100 can be easily manufactured.

### (Method for attaching heater)

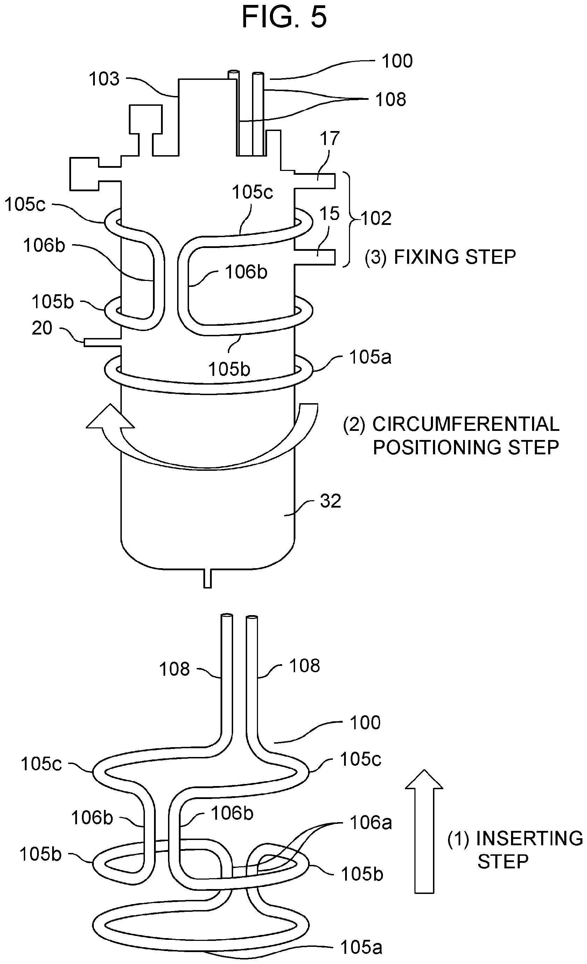

Next, a method for attaching heater 100 will be described with reference to Fig. 5.

Fig. 5 is an explanatory view illustrating the method for attaching heater 100 according to the first exemplary embodiment.

As illustrated in Fig. 5, the method for attaching heater 100 is performed to attach heater 100 to the outside of hydrogen generator 103, the method including an inserting step, a circumferential positioning step, and a fixing step.

When heater 100 is attached to hydrogen generator 103, the inserting step is first performed. The inserting step is performed to insert an upper part of heater 100 onto hydrogen generator 103 from below.

The inserting step is performed to insert heater 100 onto the outside of hydrogen generator 103 to allow protrusion 102 of hydrogen generator 103 to pass through between straight end parts 108 of heater 100 (see the inserting step in Fig. 5).

Subsequently, the circumferential positioning step is performed. The circumferential positioning step is performed to rotate heater 100 in the circumferential direction of hydrogen generator 103 to locate protrusion 102 (air pipe 15 in this example) at a predetermined position between second circular arc part 105b and third circular arc part 105c (see the circumferential positioning step in Fig. 5). As a result, heater 100 is positioned in the circumferential direction.

Then, the fixing step is finally performed. The fixing step is performed to fix heater 100 positioned at the predetermined position to hydrogen generator 103 (see the fixing step in Fig. 5).

### [1-2. Operation]

Heater 100 of hydrogen generator 103 configured as described above will be described below in terms of its operation and action.

Hydrogen generator 103 energizes heater 100 to heat CO reduction catalyst 13 and CO removal catalyst 14 at startup. As a result, hydrogen generator 103 quickly raises temperature of CO reduction catalyst 13 and temperature of CO removal catalyst 14 to cause CO reduction catalyst 13 and temperature of CO removal catalyst 14 to efficiently react. Heater 100 composed of one sheath heater heats outer cylinder 32 of hydrogen generator 103 to simultaneously heat CO reduction catalyst 13 and CO removal catalyst 14.

In this case, heater 100 is formed into an annular shape in plan view, and then inserted and attached onto the outside of hydrogen generator 103, and thus requiring no winding operation or the like during assembly, and preventing variation in heating due to assembly.

Straight end parts 108 are located in an upper part of hydrogen generator 103 in the vertical direction, and are formed having a gap dimension larger than an outer shape of protrusion 102 of hydrogen generator 103 in the circumferential direction. Thus, heater 100 can avoid interference between straight end part 108 and protrusion 102 even when heater 100 is moved from the lower part to the upper part of hydrogen generator 103 in the inserting step.

Heater 100 includes a lowermost composed of first circular arc part 105a surrounding the periphery of hydrogen generator 103 by nearly one turn along the circumferential direction of hydrogen generator 103, and thus enabling a part of outer cylinder 32 of hydrogen generator 103, the part being in contact with first circular arc part 105a, to be uniformly heated.

Heater 100 includes two stages of second circular arc part 105b and third circular arc part 105c that are disposed between straight end part 108 and first circular arc part 105a while surrounding the outer periphery of hydrogen generator 103 by nearly one turn. This structure enables heater 100 to uniformly heat three places in the vertical direction of outer cylinder 32 of hydrogen generator 103, together with first circular arc part 105a.

Second circular arc part 105b and third circular arc part 105c are formed having an interval therebetween that is larger than an interval between protrusions 102 of hydrogen generator 103 in the vertical direction. Thus, when heater 100 is inserted onto hydrogen generator 103 to perform the circumferential positioning step of rotating heater 100, heater 100 and protrusions 102 can be prevented from interfering with each other.

### [1-3. Effects and like]

As described above, heater 100 according to the first exemplary embodiment is for hydrogen generator 103, and is attached to hydrogen generator 103 having the outer periphery provided with protrusions 102. Heater 100 includes straight end parts 108 defined as both end parts, straight end parts 108 being continuously formed by at least two circular arc parts 105 and straight parts 106 with folded parts 107 (first folded part 107a and second folded part 107b). At least two circular arc parts 105 (first circular arc part 105a, second circular arc part 105b, and third circular arc part 105c) each extend in the circumferential direction of hydrogen generator 103. Straight parts 106 (first straight part 106a and second straight part 106b) connect corresponding circular arc parts 105 to each other. Straight end parts 108 are formed with a gap that is larger in dimension than an outer shape of protrusion 102 of hydrogen generator 103. Second circular arc part 105b and third circular arc part 105c are formed having an interval therebetween that is larger than an interval between protrusions 102 of hydrogen generator 103.

Thus, heater 100 can uniformly heat hydrogen generator 103 in the circumferential direction without interfering with protrusions 102 of hydrogen generator 103 in the circumferential direction during installation even in a tubular structure using a sheath heater having a sheath diameter more than or equal to a certain value. As a result, heater 100 can prevent a catalyst from being wetted with water and deteriorating due to condensation of water vapor in a reformed gas at startup.

Heater 100 according to the first exemplary embodiment is formed with straight part 106 and straight end part 108 that extend in a substantially vertical direction of hydrogen generator 103 while being attached to hydrogen generator 103. Heater 100 is also formed with circular arc part 105 that extends in a substantially horizontal direction of hydrogen generator 103 while being attached to hydrogen generator 103.

Heater 100 according to the first exemplary embodiment includes circular arc part 105, straight part 106, and straight end part 108, which are formed by bending one sheath heater.

The method for manufacturing heater 100 according to the first exemplary embodiment includes the two-dimensional bending step and the UO forming step. The two-dimensional bending step is performed to bend one sheath heater in the shape of a rod in a two-dimensional manner. The one sheath heater in the shape of a rod is bent into a shape in a two-dimensional manner in the two-dimensional bending step, the shape including straight end parts 108 defined as both end parts, straight end parts 108 being continuously formed by at least two circular arc parts 105 and straight parts 106 with folded parts 107 (first folded part 107a and second folded part 107b). At least two circular arc parts 105 (first circular arc part 105a, second circular arc part 105b, and third circular arc part 105c) each extend in the circumferential direction of hydrogen generator 103 having the outer periphery provided with protrusions 102. Straight parts 106 (first straight part 106a and second straight part 106b) connect corresponding circular arc parts 105 to each other. The one sheath heater in the shape of a rod is also bent into a second shape in a two-dimensional manner in the two-dimensional bending step, the second shape including second circular arc part 105b and third circular arc part 105c that are formed with a gap larger than a gap between protrusions 102 of hydrogen generator 103 in the direction orthogonal to the circumferential direction. The UO forming step is performed to form the sheath heater bent in a two-dimensional manner in the two-dimensional bending step into a substantially annular shape in plan view by performing UO forming on the sheath heater to form a gap between straight end parts 108, the gap being larger in dimension than an outer shape of protrusions 102 of hydrogen generator 103.

As a result, heater 100 having a complicated three-dimensional structure can be relatively easily manufactured.

The method for attaching heater 100 according to the first exemplary embodiment is performed to attach heater 100 to the outside of hydrogen generator 103. The method for attaching heater 100 includes the inserting step, the circumferential positioning step, and the fixing step. The inserting step is performed to insert heater 100 onto the outside of hydrogen generator 103 to allow protrusion 102 of hydrogen generator 103 to pass through at least between straight end parts 108 of heater 100. The circumferential positioning step is performed to rotate heater 100 in the circumferential direction of hydrogen generator 103 to allow protrusion 102 to be positioned at a predetermined position between second circular arc part 105b and third circular arc part 105c. The fixing step is performed to fix heater 100 positioned at the predetermined position to hydrogen generator 103.

This method enables heater 100 to be relatively easily attached to hydrogen generator 103 even when protrusion 102 is provided on the outer periphery of hydrogen generator 103.

### (Modifications)

Next, modifications of heater 100 will be described.

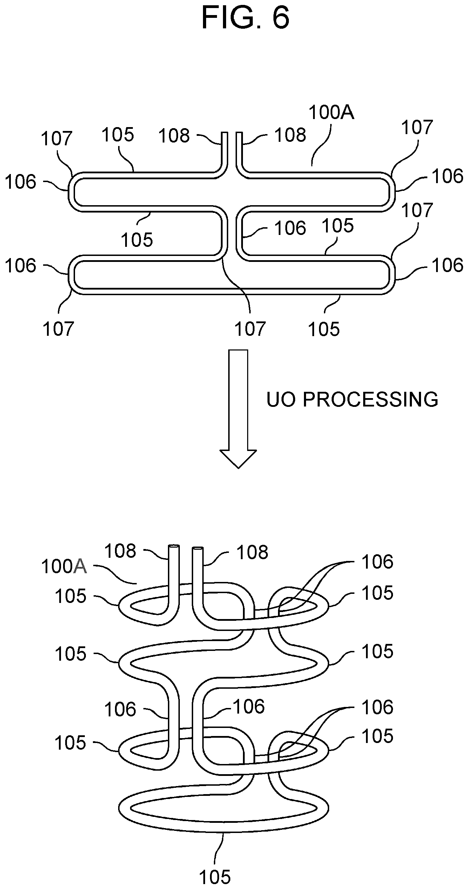

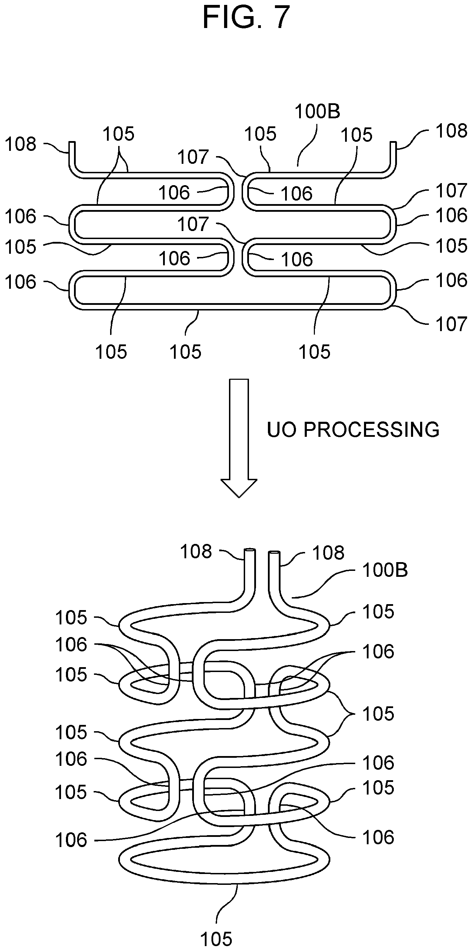

Fig. 6 is an explanatory view illustrating a method for manufacturing heater 100A according to a first modification. Fig. 7 is an explanatory view illustrating a method for manufacturing heater 100B according to a second modification. In the following description, each circular arc part is described as circular arc part 105 without being particularly distinguished. Similarly, each straight part and each folded part are described as straight part 106 and folded part 107, respectively.

Although the first exemplary embodiment includes three circular arc parts 105, heater 100A illustrated in Fig. 6 includes four circular arc parts 105 that are each connected to corresponding one of circular arc parts 105 with straight part 106 to increase the number of stages.

Similarly, heater 100B illustrated in Fig. 7 includes five circular arc parts 105 that are each connected to corresponding one of circular arc parts 105 with straight part 106 to further increase the number of stages.

Heaters 100A, 100B are each also formed by bending one sheath heater into a shape in a two-dimensional manner, the shape including circular arc parts 105 connected to corresponding straight parts 106, and then the sheath heater having been bent in a two-dimensional manner is subjected to UO forming. As a result, heaters 100A, 100B each having a substantially annular columnar shape in plan view can be obtained.

The number of circular arc parts 105 described in the first exemplary embodiment, the first modification, and the second modification is an example. The number of circular arc parts of the heater according to the present disclosure may be two or more, and thus may be two, or six or more. That is, the number of circular arc parts in the present disclosure is selectable from any number of two or more, depending on size of the hydrogen generator according to the present disclosure to which the heater according to the present disclosure is attached. That is, examples of the heater according to the present disclosure include a heater according to a third modification below. The heater according to the third modification includes straight end parts 108 defined as both end parts, straight end parts 108 being continuously formed by two circular arc parts 105 and straight parts 106 connecting two circular arc parts 105 with corresponding folded parts 107. The heater according to the third modification includes straight end parts 108 formed with a gap that is larger in dimension than an outer shape of protrusion 102 of hydrogen generator 103. The heater according to the third modification includes two circular arc parts 105 formed with an interval therebetween that is larger than an interval between protrusions 102 of hydrogen generator 103 in a direction orthogonal to the circumferential direction of hydrogen generator 103.

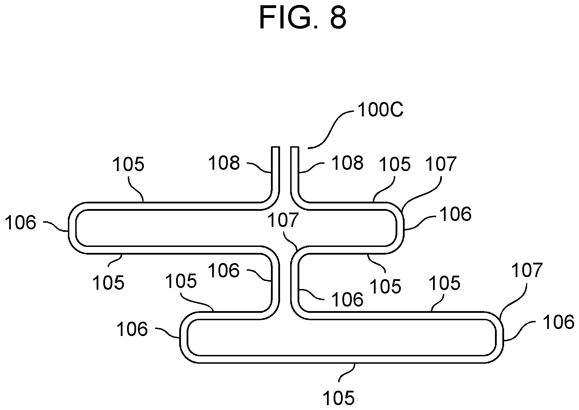

Fig. 8 is a plan view illustrating a configuration of heater 100C according to a fourth modification.

As illustrated in Fig. 8, heater 100C is formed with circular arc parts 105 having right and left lengths different from each other, and thus causing folded parts 107 to be shifted horizontally in position.

This structure also enables obtaining heater 100C having a substantially annular columnar shape in plan view.

### INDUSTRIAL APPLICABILITY

The present disclosure is applicable to a heater for a hydrogen generator, the heater being attached to the hydrogen generator having an outer periphery provided with a protrusion.

### REFERENCE MARKS IN THE DRAWINGS

- 5: evaporator
- 11: reforming catalyst
- 13: CO reduction catalyst
- 14: CO removal catalyst
- 15: air pipe
- 17: outlet pipe
- 19: heating device
- 20: temperature port
- 28: water feeder
- 29: raw material feeder
- 30: innermost cylinder
- 31: inner cylinder
- 32: outer cylinder
- 51: A-gas flow path
- 52: B-gas flow path
- 100: heater
- 100A: heater
- 100B: heater
- 100C: heater
- 102: protrusion
- 103: hydrogen generator
- 105: circular arc part
- 105a: first circular arc part
- 105b: second circular arc part
- 105c: third circular arc part
- 106: straight part
- 106a: first straight part
- 106b: second straight part
- 107: folded part
- 107a: first folded part
- 107b: second folded part
- 108: straight end part

## Claims

1. A heater that is for a hydrogen generator having an outer periphery provided with protrusions, the heater being attached to the hydrogen generator, the heater comprising:
straight end parts defined as both end parts, the straight end parts being continuously formed by at least two circular arc parts and straight parts with folded parts, the at least two circular arc parts each extending in a circumferential direction of the hydrogen generator, the straight parts connecting the circular arc parts to each other,
the straight end parts being formed with a gap that is larger in dimension than an outer shape of the protrusion of the hydrogen generator,
the at least two circular arc parts include circular arc parts formed with a gap larger than a gap between the protrusions of the hydrogen generator in a direction orthogonal to the circumferential direction.

2. The heater according to Claim 1, wherein the heater is formed with the straight parts and the straight end parts that extend in a substantially vertical direction of the hydrogen generator while the heater is attached to the hydrogen generator, and with the at least two circular arc parts that extend in a substantially horizontal direction of the hydrogen generator while the heater is attached to the hydrogen generator.

3. The heater according to Claim 1 or 2, wherein the at least two circular arc parts, the straight parts, and the straight end parts are formed by bending one sheath heater.

4. A method for manufacturing a heater, the method comprising:
a two-dimensional bending step of bending one sheath heater in a shape of a rod into a first shape in a two-dimensional manner, the first shape including
straight end parts defined as both end parts, the straight end parts being continuously formed by at least two circular arc parts extending in a circumferential direction of a hydrogen generator having an outer periphery provided with protrusions, and by straight parts connecting the at least two circular arc part to each other with folded parts, and
the at least two circular arc parts that include circular arc parts formed with a gap larger than a gap between the protrusions of the hydrogen generator in a direction orthogonal to the circumferential direction; and
a UO forming step of forming the sheath heater bent in a two-dimensional manner in the two-dimensional bending step into a substantially annular shape in plan view by performing UO forming on the sheath heater to form a gap between the straight end parts, the gap being larger in dimension than an outer shape of the protrusions of the hydrogen generator.

5. A method for attaching the heater according to Claim 1 to an outside of the hydrogen generator, the method comprising:
an inserting step of inserting the heater onto the outside of the hydrogen generator to allow the protrusions of the hydrogen generator to pass through at least between the straight end parts of the heater;
a circumferential positioning step of rotating the heater in the circumferential direction of the hydrogen generator to allow the protrusions each to be positioned at a predetermined position between the at least two circular arc parts; and
a fixing step of fix the heater positioned at the predetermined position to the hydrogen generator.
